# EUROPEAN PATENT APPLICATION

(11) **EP 4 811 797 A1**
(43) Date of publication of application: **23.09.2026**
(21) Application number: 25305373.0
(22) Date of filing: 19.03.2025
(51) Int. Cl.: H04N 21/234, G06T 13/00, H04N 21/44, H04N 21/81, H04N 21/84, H04N 21/8543

(54) **PARAMETRIC TEXTURES IN AVATAR REPRESENTATION FORMAT**

(71) Applicant: InterDigital CE Patent Holdings, SAS, 75017 Paris (FR)
(72) Inventor: GOSSELIN, Philippe Henri, 35340 LIFFRE (FR); AVRIL, Quentin, 35830 BETTON (FR); LE CLERC, Francois, 35590 L'HERMITAGE (FR); COVA REGATEIRO, João Pedro, 35220 CHATEAUBOURG (FR)
(74) Representative: Vossius & Partner Patentanwälte Rechtsanwälte mbB

(57) **Abstract**

In an example method, a scene description file representing an avatar is obtained, the scene description file including a texture sets component. The texture sets component includes at least one texture set. Each of the texture sets identifies at least one texture. At least a first one of the texture sets identifies a first texture and a second texture. A stream of texture weights is obtained including first weights associated with the first texture and second weights associated with the second texture. A parametric texture is determined for the avatar using a combination of the textures in the first texture set, including the first texture weighted by the first weights and the second texture weighted by the second weights. The avatar is animated using the parametric texture.

## Description

### BACKGROUND

The domain of the invention is the encoding of textures and parametric textures in the MPEG Avatar Representation Format (ARF). Parametric textures are a linear combination of textures, which allows the editing and animation of textures.

### SUMMARY

Briefly stated, in one embodiment a method comprises: obtaining a scene description file representing an avatar, the scene description file including a texture sets component, the texture sets component including at least one texture set, each texture set identifying at least one texture, wherein at least a first one of the texture sets identifies a first texture and a second texture; obtaining a stream of texture weights including first weights associated with the first texture and second weights associated with the second texture; determining a parametric texture for the avatar using a combination of the textures in the first texture set, including the first texture weighted by the first weights and the second texture weighted by the second weights; and animating the avatar using the parametric texture.

An apparatus according to some embodiments comprises one or more processors configured to perform at least: obtaining a scene description file representing an avatar, the scene description file including a texture sets component, the texture sets component including at least one texture set, each texture set identifying at least one texture, wherein at least a first one of the texture sets identifies a first texture and a second texture; obtaining a stream of texture weights including first weights associated with the first texture and second weights associated with the second texture; determining a parametric texture for the avatar using a combination of the textures in the first texture set, including the first texture weighted by the first weights and the second texture weighted by the second weights; and animating the avatar using the parametric texture.

In some embodiments, the texture sets data structure includes a plurality of texture sets, including at least a second texture set different from the first texture set.

In some embodiments, the first texture set includes a material property, and wherein the avatar is animated using the material property associated with the first texture set.

In some embodiments, the first texture set includes an animation information property, the animation information property identifying at least one supported animation framework, and the avatar is animated using at least one of the identified supported animation frameworks.

In some embodiments, the scene description file includes a data object, and each of the textures identified in the texture sets identifies corresponding data included in the data object. In some such embodiments, for at least one of the first or the second textures, the corresponding data included in the data object includes a reference to texture data in an external file. In some such embodiments, the reference to texture data in the external file includes texture path information, the texture path information indicating which texture to consider in the external file

In some embodiments, the scene description file further includes a plurality of level-of-detail assets including at least a first level-of-detail asset identifying at least the first texture set, further comprising: making a determination to render the avatar using a level of detail associated with the first level-of-detail asset; wherein the use of the textures in the first texture set to determine the parametric texture is responsive to a determination that the first level-of-detail asset identifies the first texture set.

In some embodiments, the scene description file further includes a supported animation object identifying types of animation supported by the avatar, the supported animation object including a texture animations property identifying at least one type of supported texture animation.

An method according to some embodiments comprises: encoding a scene description file representing an avatar; wherein the scene description file includes a texture sets component; and wherein the texture sets component includes at least one texture set, each texture set identifying at least one texture.

An apparatus according to some embodiments comprises one or more processors configured to perform at least: encoding a scene description file representing an avatar; wherein the scene description file includes a texture sets component; and wherein the texture sets component includes at least one texture set, each texture set identifying at least one texture.

In some embodiments, the texture sets data structure includes a plurality of texture sets, including at least a second texture set different from the first texture set.

In some embodiments, the scene description file includes a data object, wherein each of the textures identified in the texture sets identifies corresponding data included in the data object, and wherein, for at least one of the first or the second textures, the corresponding data included in the data object includes a reference to texture data in an external file.

In some embodiments, the scene description file further includes a plurality of level-of-detail assets including at least a first level-of-detail asset identifying at least the first texture set.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 illustrates an example structure of an avatar representation format (ARF) container according to an example embodiment.
FIG. 2 is a flow diagram of a method of parsing a "supportedAnimation" property of the "preamble" root property used in some embodiments.
FIG. 3 is a flow diagram of a processing method used to animate an avatar in some embodiments.
FIG. 4 is a flow diagram of a method of parsing an LOD object with "textureSets" as used in some embodiments.
FIG. 5 is a flow diagram of a method of parsing a TextureSet object used in some embodiments.
FIG. 6 is a flow diagram of a method of parsing a Texture object used in some embodiments.
FIG. 7 is a flow diagram of a decoding method performed in some embodiments.
FIG. 8 is a flow diagram of an encoding method performed in some embodiments.
FIG. 9 is a functional block diagram of a processing apparatus that may be used to implement one or more of the encoding, decoding, parsing, processing, and/or rendering methods described herein.

### DETAILED DESCRIPTION

### Overview of avatar coding

An overview of MPEG ARF is provided in the Draft CD text of ISO/IEC 23090-39:2025 "Avatar Representation Format", MPEG document MDS24753_WG03_N01453, MPEG#149, Geneva, Switzerland, January 2025. Currently, the MPEG-I Scene Description (SD) format may be used together with the "MPEG node avatar" extension to encode an avatar in a gITF file. The "MPEG node avatar" extension is described in, for example, International Publication No. WO 2024/200057, entitled "Avatar signaling in scene description."

With the use of an "MPEG texture targets" extension, a parametric texture can be encoded in a gITF file. The "MPEG texture targets" extension is described in, for example, International Publication No., WO 2024/256340, entitled "Texture targets in scene description."

Textures and parametric textures for an avatar can be defined in a scene description file using a "textures" property as described in, for example, European Patent Application No. EP24305389.9, filed 15 March 2024, and International Application No. PCT/EP2025/055056, filed 25 February 2025, both entitled "Avatars with Parametric Textures in Scene Descriptions."

Using solutions as described above, the signaling of parametric textures calls for an embedding of the parametric textures inside the file (e.g. the scene description file, such as a gITF or the Avatar JSON Interchange File Format, AJIF). These solutions, however, do not accommodate a situation in which the parametric textures are encoded in a file different from the scene description file.

One feature of MPEG Avatar Representation Format (ARF) is the signaling of streaming animation formats. Such a signal informs the decoder that the avatar can be animated following a specific list of animation controls. An animation stream may be formatted as described, for example, in European Patent Application No. EP25305042.1, filed 14 January 2025, entitled "Avatar Parametric Texture Bitstream Format." As described there, the animation stream includes a list of weights, each weight being associated with a texture or a texture target.

### Issues addressed in some embodiments

The present disclosure relates to methods and apparatus for signaling an avatar that supports parametric texture animation streaming format and for animating the avatar using this streaming format.

In example embodiments, a parametric texture can be computed using a formula such as the following: $texture = clamp \left(textureBase+{\sum }_{i} {weight}_{i} \times {textureTarget}_{i}\right)$

This formula can be understood as having three main components: a base texture, texture weights, and a plurality of texture targets.

The base texture is a usual (static) texture as defined in scene description formats. It is based on an image and associated with other data like UV coordinates and photometric properties. The UV coordinates are usually bound to a mesh and the photometric properties are usually bound to a material. Scene description formats like gITF can be used to embed all this information, and MPEG ARF can reference such containers to signal a textured avatar.

The texture weights are used to combine texture targets to create a new texture. In the context of the present disclosure, the weights may be provided by an animation data stream. In some embodiments, the animation data stream may have the format disclosed in European Patent Application No. EP25305042.1, filed 14 January 2025, entitled "Avatar Parametric Texture Bitstream Format," but other embodiments may use other animation data stream formats.

The texture targets are the textures that are to be combined using the texture weights to create new textures. In some cases, the texture targets may be images like the base texture. Other texture targets may be displacements, which may have negative values. Texture targets may be coded using any of a variety of techniques for coding of textures, such as the techniques described in International Publication No., WO 2024/256340, entitled "Texture targets in scene description."

An application, such as an application on a client device, may operate to compute a texture combination and use it on an avatar when all of these types of information are reachable and correctly connected. For example, the base texture may be used to create an avatar with a default texture. Then, based on the stream of texture weights, the application computes the new texture by combining the texture weights with the texture targets, and it adds the result to the base texture. The other information used to apply the new texture display (such as UV coordinates) is the same as the information used to apply the texture base for display.

Example embodiments provide methods and apparatus for signaling the information used to locate the base texture and texture targets, to combine them with the good incoming texture weights, and to update the right avatar texture.

### Overview of example embodiments

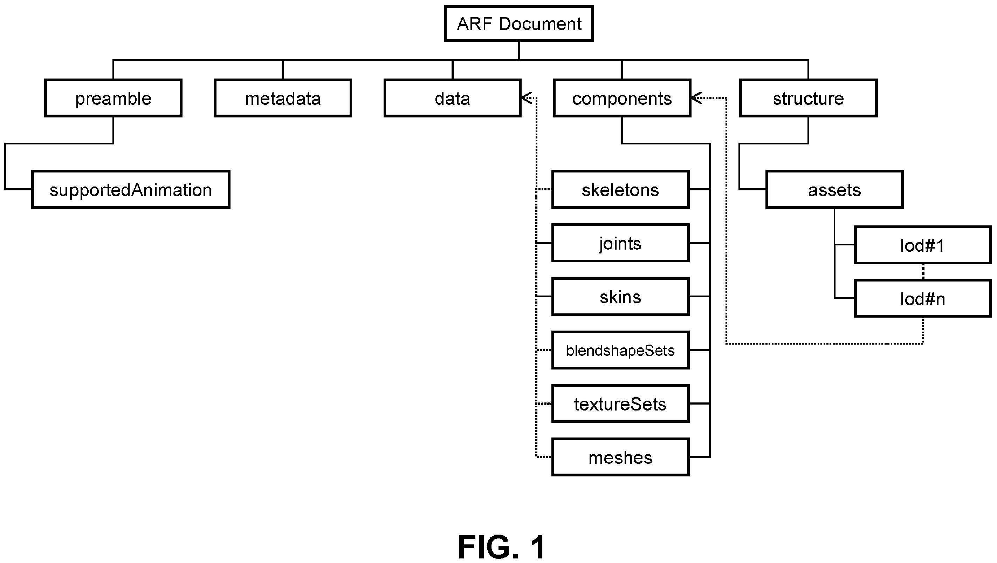

MPEG ARF is based on a set of containers regrouped into categories. FIG. 1 provides an overview of this structure. Within the ARF document, the "preamble" is used to uniquely identify the format and characteristics of the file. In particular, it contains a "supportedAnimation" property, which lists the streaming animation formats that the file supports. In embodiments of the present disclosure, the supportedAnimation incorporates additional information as described in greater detail below.

The "metadata" object includes information such as an age or gender of the avatar.

The "data" object includes low-level data, such as arrays of values, tensors, and/or references to external files. Items within this container are referenced by items in the "components" object.

The "components" object contains several elements, each one dedicated to a type of component. Components such as skeletons, joints, skins, blendshape sets, and/or meshes may be used. Example embodiments as disclosed herein further use a "textureSets" component. The textureSets data structure is used to signal properties of textures of the avatar. The textureSets data structure contains a list of TextureSet data structures. Details of the TextureSet data structures are described in greater detail below.

The "structure" object contains "assets," which define the components for an avatar part (body, hand, head, ...) for each level of detail (LOD).

As noted above, the SupportedAnimation object identifies the types of animation supported by the avatar format. Table 1 represents the properties provided by a SupportedAnimation object.

**Table 1 - Properties of a SupportedAnimation**

| Name | Type | Use | Description |
|---|---|---|---|
| faceAnimations | array(uri) | M | Lists the supported face animation types. Each item in the array is a string representing a supported face animation type. |
| | | | |
| | | | Each identifier should be formatted as a URN that includes an identifier of the framework, followed by an identifier of the facial blendshape set. |
| bodyAnimations | array(uri) | M | Lists the supported body animation types. Each item in the array is a string representing a supported body animation type. |
| | | | |
| | | | Each identifier should be formatted as a URN that includes an identifier of the body animation/tracking framework, followed by an identifier of the body joint set. |
| handAnimations | array(uri) | M | Lists the supported hand animation types. Each item in the array is a string representing a supported hand animation type. |
| | | | |
| | | | Each identifier should be formatted as a URN that includes an identifier of the hand animation/tracking framework, followed by an identifier of the hand joint set. |
| landmarkAnimations | array(uri) | O | Lists the supported landmark animation types. Each item in the array is a string representing a supported landmark animation type. |
| | | | Each identifier should be formatted as a URN that includes an identifier of the landmark animation/tracking framework, followed by an identifier of the landmark set. |
| proprietaryAnimations | array( Proprietary Animation) | O | A list of proprietary animation descriptions, which may be used to animate assets in the ARF container. |
| textureAnimations | array(uri) | M | Lists the supported texture animation types. Each item in the array is a string representing a supported texture animation type. |

The "textureAnimations" property, introduced in the present disclosure, lists the texture animation formats supported by the avatar in the ARF.

The Level of Detail object provides a link to all components of an asset at a specific level of detail. Example properties of an LOD object are shown in Table 2.

**Table 2 - Properties of a LOD**

| Name | Type | Use | Description |
|---|---|---|---|
| name | string | M | The name of the LOD. |
| skins | array(number) | O | List of references to all skins that are part of this asset. |
| meshes | array(number) | M | List of non-skinned meshes that are part of this asset. |
| skeletons | array(number) | O | List of references to skeletons in the ARF container. |
| blendshapeSets | array(number) | O | List of references to blendshape sets in the ARF container. |
| textureSets | array(number) | O | List of references to texture sets in the ARF container. |

The "textureSets" property is introduced in the present disclosure to allow the referencing of all texture sets used by the LOD.

In some embodiments, the "textureSets" does not reference texture sets in the "components" root property, but directly contains the properties of texture sets, e.g., the type of "textureSets" in LOD is "array(TextureSet)". In these embodiments, there is no "textureSets" property in the "components" root property.

The "components" object may be considered the core of the ARF document. It lists all the components of the ARF container and provides sufficient information to access and use these components for the reconstruction and animation of the base avatar model. The following table provides the contents of the components object.

| **Name** | **Type** | **Use** | **Description** |
|---|---|---|---|
| skeletons | array(Skeleton) | O | A list of skeletons used to describe the avatar skeletal asset. |
| skins | array(Skin) | O | A list of assets that are stored in this ARF container. |
| meshes | array(Mesh) | M | A list of geometries used to describe the avatar asset. |
| nodes | array(Node) | O | A list of nodes used to organize, merge and describe and transform the avatar components. |
| blendshapeSets | array( BlendshapeSet) | O | A list of blend shape sets used to describe the blend shape-based animations. |
| landmarksets | array(LandmarkSet) | O | A list of landmark sets used to describe landmark-based animation. |
| textureSets | array(TextureSet) | O | A list of texture sets used to describe texture-based animation. |

Within the "components" object, the "textureSets" property is introduced in the present disclosure to allow the definition of texture sets of the avatar.

It may be noted that in this and other tables representing the contents of a data object, the use of the symbols "M" to indicate a mandatory property and "O" to represent an optional property applies only to the particular example syntax being illustrated. Properties that are mandatory in one embodiment may be optional in another embodiment, and vice versa. A property that is identified as mandatory in one embodiment is not necessarily a mandatory property of all embodiments.

Table 3 illustrates example properties of a TextureSet.

**Table 3 - Properties of a TextureSet**

| **Name** | **Type** | **Use** | **Description** |
|---|---|---|---|
| name | string | M | The name of the texture set. |
| id | integer | M | A unique identifier of the texture set. |
| animationlnfo | array(AnimationLink) | M | Establishes a link to the supported animation and tracking frameworks that this texture set can be used with. |
| description | string | O | The description of the texture set. |
| purpose | string | O | The purpose of the texture set. |
| type | string | M | Indicates which texture type is animated by this texture set (like "diffuse", "specular", etc.). |
| material | integer | O | References an item in the data root component with a material. |
| materialPath | string | O | Indicates where the material can be found in the item referenced by "material". |
| textures | array(Texture) | M | The list of textures. |

The TextureSet property type is introduced by this disclosure. TextureSet items are stored in the "textureSets" property of the "components" root property. They may be referenced by the "textureSets" property of a LOD.

The TextureSet property is used to define which textures can be linearly combined with weights received by a parametric texture animation stream to animate the avatar.

The "name" property defines the name of the avatar texture set.

The "id" property defines a unique integer for identifying the avatar texture.

The "animationlnfo" property defines the animation streaming formats that can be used with the texture set. It includes an array of AnimationLink properties. Each AnimationLink object establishes a link between an animation component and a list of supported animation frameworks. An example syntax of AnimationLink is provided in the following table.

| **Name** | **Type** | **Use** | **Description** | |
|---|---|---|---|---|
| type | enumeration | M | The type of the supported animation. The allowed types are: | |
| | | | | • ANIMATION_FACE |
| | | | | • ANIMATION_BODY |
| | | | | • ANIMATION_HAND |
| | | | | • ANIMATION_LANDMARK |
| | | | | • ANIMATION_TEXTURE |
| links | array(number) | | Provides the indices in the associated supported animations list, for the animation frameworks that this blendshape set can be used with. | |

The "description" property describes the avatar texture set and its usage. This is only illustrative, for example, it can be used in a user interface to help the user understand what the texture set was intended for.

The "purpose" property contains a string that identifies the purpose of the avatar texture set. It must follow predetermined values, defined by an application or a standard. In some embodiments, the type of this property is an enum.

The "type" property defines the type of texture being animated by this texture set. For example, "diffuse" means that the diffuse texture is animated. The value of this property can be used to retrieve the right textures a component referenced by other properties like "material"/"materialPath" and ones in Texture. For instance, if "material"/"materialPath" targets a gITF material with different textures, like one with diffuse and specular, then the value of "type" can be used to select the right one.

The "material"/"materialPath" properties reference a material, possibly encoded in an external file if the data item referenced by "material" targets an external file. The "materialPath" property can be used to accurately indicates which texture(s) to use, in cases where there is an ambiguity. For example, if "material" references a data item which targets a gITF file with two materials, then a value of "material/1" for "materialPath"indicates that the second material of the gITF is the one to consider for this texture set. The value of "materialPath" can also directly target a specific texture in a material like "material/1/pbrMetallicRoughness/baseColorTexture".

The referenced material can contain a list of texture targets (for instance, using the properties introduced in International Publication No. WO 2024/256340, entitled "Texture targets in scene description." The referenced material can also be using non-parametric textures, in which case the "textures" property defines the texture targets of the set, whose combination will update one of the non-parametric textures of the material. Either way, the "material"/"materialPath" properties define the texture which is updated (e.g. the base texture) and possibly associated properties. It is expected that the referenced material is used by one or more meshes of the avatar. Consequently, if the texture referenced by "material"/"materialPath" changes using texture weights and the texture targets (defined in the referenced material or in the "textures" property), the rendering of the avatar will also change accordingly.

Some embodiments include a technique for deducing the texture to update in case the "material" property is not present. For instance, if the avatar has only one texture, it is deduced to be that one texture. If the "type" is "diffuse" and there is only one diffuse texture, it is deduced to be the diffuse texture, and analogously for other types.

The "textures" contains the properties of each texture of the set, as described in greater detail below. This property defines texture targets if they are not defined in the material referenced by "material"/"materialPath".

The Texture property type is introduced in the present disclosure. Example properties of a Texture object are represented in Table 4.

**Table 4 - Properties of Texture**

| Name | Type | Use | Description |
|---|---|---|---|
| name | string | M | The name of the texture. |
| id | integer | M | A unique identifier of the texture. |
| description | string | O | The description of the texture. |
| purpose | string | O | The purpose of the texture. |
| texture | number | O | References an item in the data root component with a texture. |
| texturePath | string | O | Indicates where the texture can be found in the item referenced by "texture". |

When the material referenced in the parent TextureSet contains a set of textures, then the TextureSet may be used to add additional information for the referenced textures using properties like "description" or "purpose". In addition, the "texture" and/or the "texturePath" properties may be used to indicate where the textures of the combination (e.g., the texture targets) can be found. The "id" is used to uniquely identify each texture of a texture set.

The "name" property defines the name of the texture.

The "id" property defines a unique integer for identifying the texture.

The "description" property describes the texture and its usage. This is only illustrative, for example, it can be used in a user interface to help the user understand what the texture was intended for.

The "purpose" property contains a string that identifies the purpose of the texture. It may be constrained to follow predetermined values, defined by an application or a standard. In some embodiments, the type of this property is an enum.

The "texture" references a data item with a texture or a texture target. The texture can be directly defined, for instance using a "application/mpeg.arf.dense" data item. The texture can also be in an external file, for instance using a "model/gltf-binary" data item. In the latter case, the "texturePath" property may be defined to indicate which texture to consider in the external file.

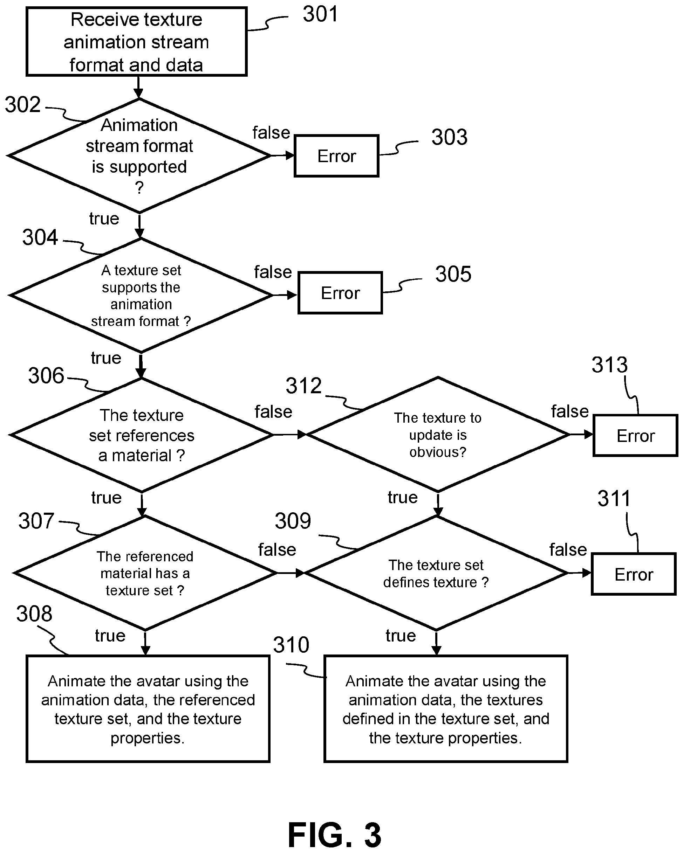

The flow chart of FIG. 3 illustrates a method for using the data as described above to animate the avatar texture. At 301, the application receives texture animation data (weights). The weights may be received in a particular animation stream format.

At 302, a determination is made of whether the avatar supports the animation stream format. The determination may be made using a determination of whether the "textureAnimation" list in the "supportedAnimation" property of the "preamble" root property contain the URN of the received animation stream format. Failure to support the animation stream format may result in an error at 303.

At 304, a determination is made of whether the avatar with the currently used LOD has a texture set that supports the animation streaming format. The determination may be made by using a determination of whether the "animationFormat" property of an item of the "textureSets" list of the "components" root property is equal to the URN of the received animation stream format, and whether the "textureSets" list of the currently used LOD references this texture set. If the avatar with the currently used LOD does not have a texture set that supports the animation streaming format, this may result in an error at 305.

At this point, two issues are addressed in order to update the texture of the avatar. One is to identify the texture (or material) to be updated. Another is to gather all the textures of the set and to combine them.

At 306, a determination is made of whether the texture set references a material.

At 307, if the texture set references a material, a determination is made of whether the texture set defines a set of textures. If the material referenced by the texture set defines a set of textures, then at 308, the texture set is used with the received animation data to compute an updated texture as the linear combination of textures. The texture properties defined in the "textures" list (like "purpose") can be used to compute the combination in a specific manner.

If the material referenced by the texture set does not define a set of textures, then at 309 a determination is made of whether the "textures" list defines the textures. If the "textures" list defines the textures and if the texture to update was identified (with a material and in a self-evident way), then at 310 they can be combined with the received animation data to compute the linear combination of textures. The texture properties defined in the "textures" list (like "purpose") can be used to compute the combination in a specific manner.

If the texture set does not define textures, even if there is a material, there are no textures to combine, so animation of the texture is not possible, and an error may be returned at 311.

At 312, if the texture set does not reference a material, a determination is made of whether there is a self-evident way to determine which texture is to be updated. For instance, if there is one and only one texture. If so, the processing may proceed at 309, described above. If there is no self-evident way to determine which texture is to be updated, it may not be feasible to identify the texture to update, and an error may be returned at 313.

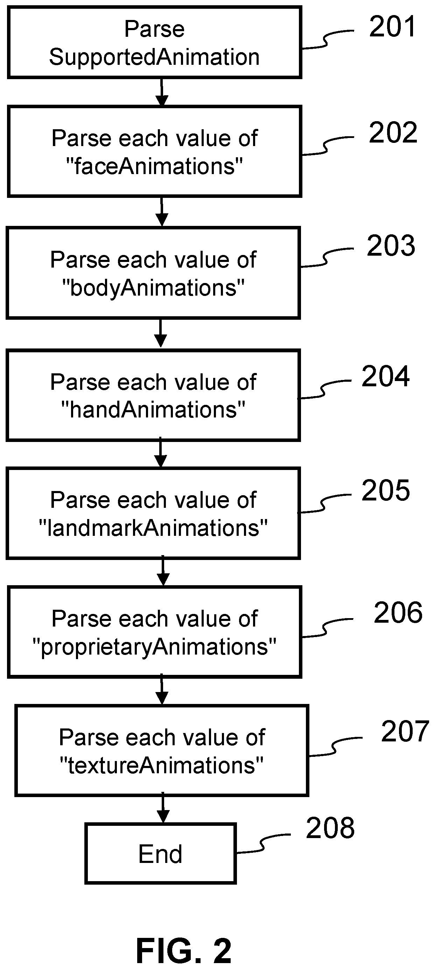

FIG. 2 is a flow chart illustrating an example method for parsing of the "supportedAnimation" property of the "preamble" root property, beginning at 201. At 202, each value of the "faceAnimations" list is parsed. At 203, each value of the "bodyAnimations" list is parsed. At 204, each value of the "handAnimations" list is parsed. At 205, each value of the "landmarkAnimations" list is parsed. At 206, each value of the "proprietaryAnimations" list is parsed. At 207, each value of the "textureAnimations" list is parsed. At 208, parsing ends.

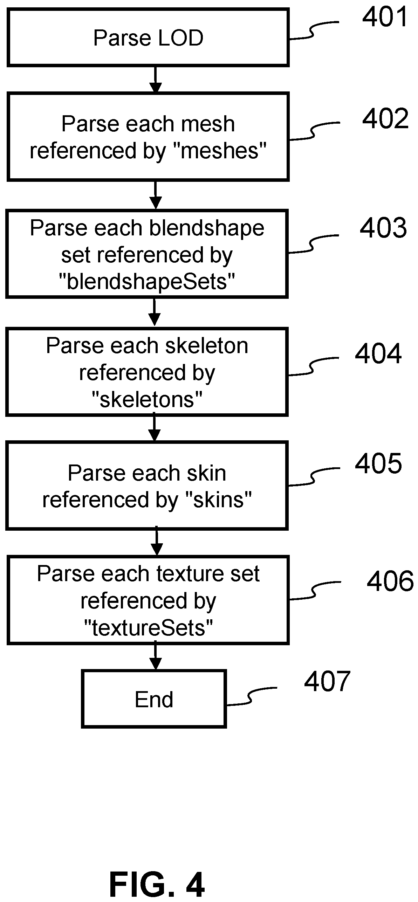

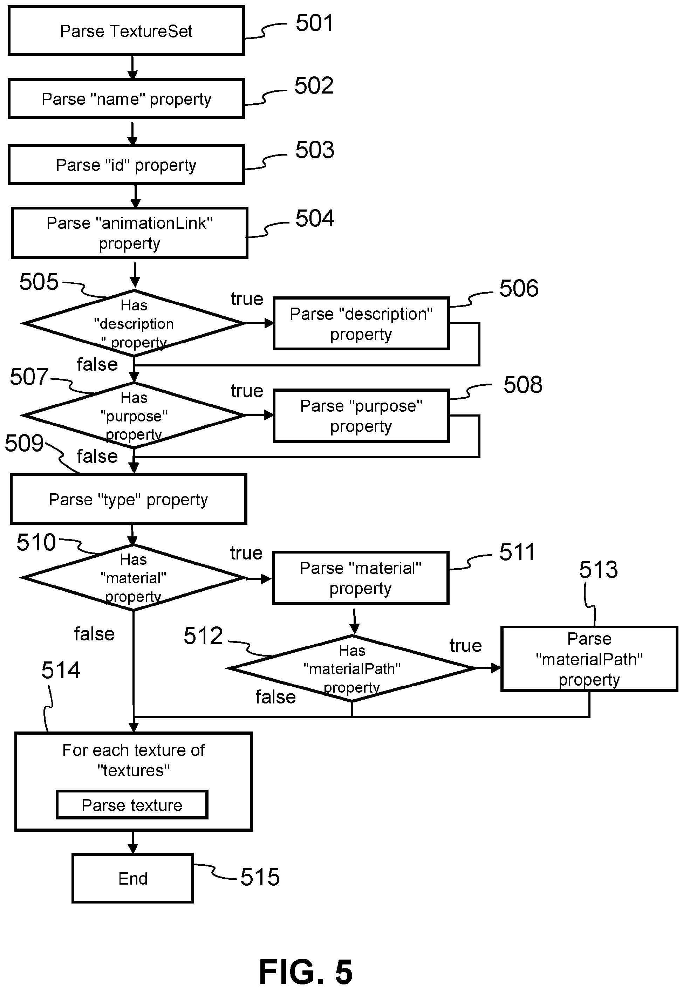

FIG. 4 is a flow chart illustrating an example method for parsing of a level of detail (LOD) object in an ARF file with the new "textureSets" property, beginning at 401. At 402, each mesh referenced the item of the "meshes" list is parsed. At 403, each blendshape set referenced the item of the "blendshapeSets" list is parsed. At 404, each skeleton referenced the item of the "skeletons" list is parsed. At 405, each skin referenced the item of the "skins" list is parsed. At 406, each texture set referenced the item of the "textureSets" list is parsed, as described in greater detail with respect to FIG. 5. At 407, parsing ends.

FIG. 5 is a flow chart illustrating an example method for parsing of a TextureSet object in the ARF file, beginning at 501.

At 502, the "name" property is parsed. In some embodiments, the presence of this property is mandatory, and an error is returned if the property is missing.

At 503, the "id" property is parsed. In some embodiments, the presence of this property is mandatory, and an error is returned if the property is missing.

At 504, the "animationLink" property is parsed. In some embodiments, the presence of this property is mandatory, and an error is returned if the property is missing. The referenced animation streaming format may be required to exist in the "preamble" root property.

At 505, a determination is made of whether the "description" property is present. If so, that property is parsed at 506.

At 507, a determination is made of whether the "purpose" property is present. If so, that property is parsed at 508.

At 509, the "name" property is parsed. In some embodiments, the presence of this property is mandatory, and an error is returned if the property is missing.

At 510, a determination is made of whether the "material" property is present. If so, that property is parsed at 511. At 512, a determination is made of whether the "materialPath" property is also present. If so, it is parsed at 513. The material indicated by "material"/"materialPath" may be required to exist and to contain a texture or a texture set.

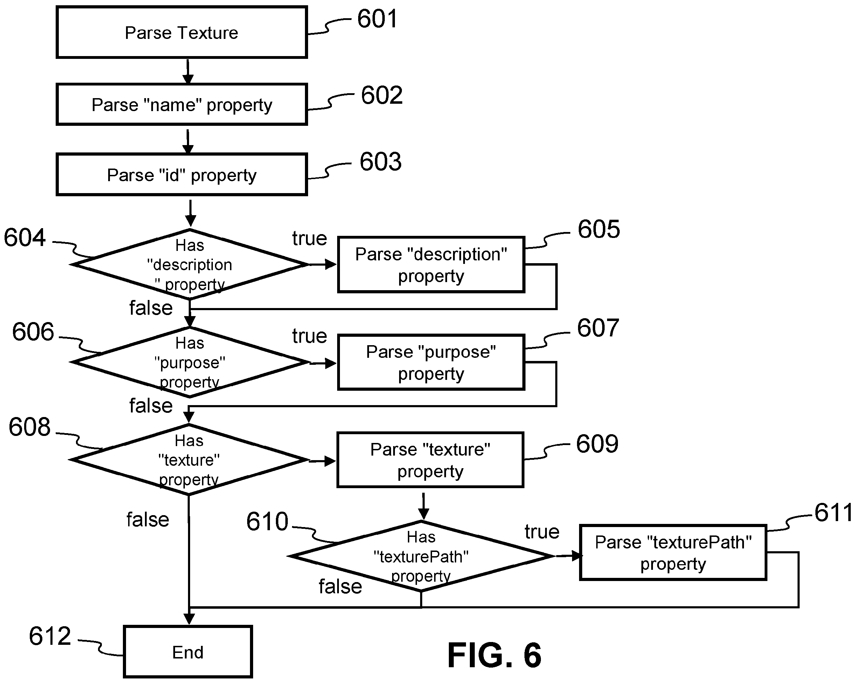

At 514, each texture of the "textures" list is parsed, as described with respect to FIG. 6. At 515, parsing ends.

FIG. 6 is a flow chart illustrating an example method for parsing of a Texture object in the ARF file, beginning at 601.

At 602, the "name" property is parsed. In some embodiments, the presence of this property is mandatory, and an error is returned if the property is missing.

At 603, the "id" property is parsed. In some embodiments, the presence of this property is mandatory, and an error is returned if the property is missing.

At 604, a determination is made of whether the "description" property is present. If so, that property is parsed at 605.

At 606, a determination is made of whether the "purpose" property is present. If so, that property is parsed at 607.

At 608, a determination is made of whether the "texture" property is present. If so, that property is parsed at 609. Furthermore, at 610, a determination is made of whether the "texturePath" property is also present. If so, it is parsed at 611. The texture indicated by "texture"/"texturePath" may be required to exist. At 612, parsing ends.

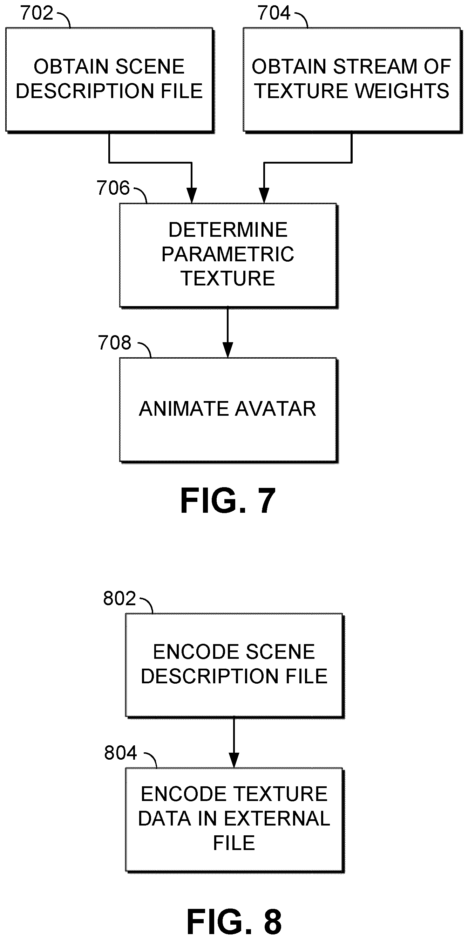

An example method that may be performed by a client device is illustrated in FIG. 7. In the example method, a scene description file representing an avatar is obtained at 702. The scene description file includes a texture sets component. The texture sets component includes at least one texture set. Each of the texture sets identifies at least one texture. At least a first one of the texture sets identifies a first texture and a second texture. At 704, a stream of texture weights is obtained, including first weights associated with the first texture and second weights associated with the second texture. At 706, a parametric texture is determined for the avatar using a combination of the textures in the first texture set, including the first texture weighted by the first weights and the second texture weighted by the second weights. At 708, the avatar is animated using the parametric texture.

FIG. 8 illustrates an example method that may be performed by an apparatus, such as a server, that operates to encode an avatar. At 802, a scene description file representing an avatar is encoded. The scene description file includes a texture sets component. The texture sets component in turn includes at least one texture set, each texture set identifying at least one texture. An apparatus receiving such a scene description file may animate the avatar using a method such as that of FIG. 7.

In some cases, the encoded scene description file includes a data object, and each of the textures identified in the texture sets identifies corresponding data included in the data object. In some such cases, for at least one of the first or the second textures, the corresponding data included in the data object includes a reference to texture data in an external file. In some embodiments, the texture data is encoded in an external file at 804.

### Example Systems

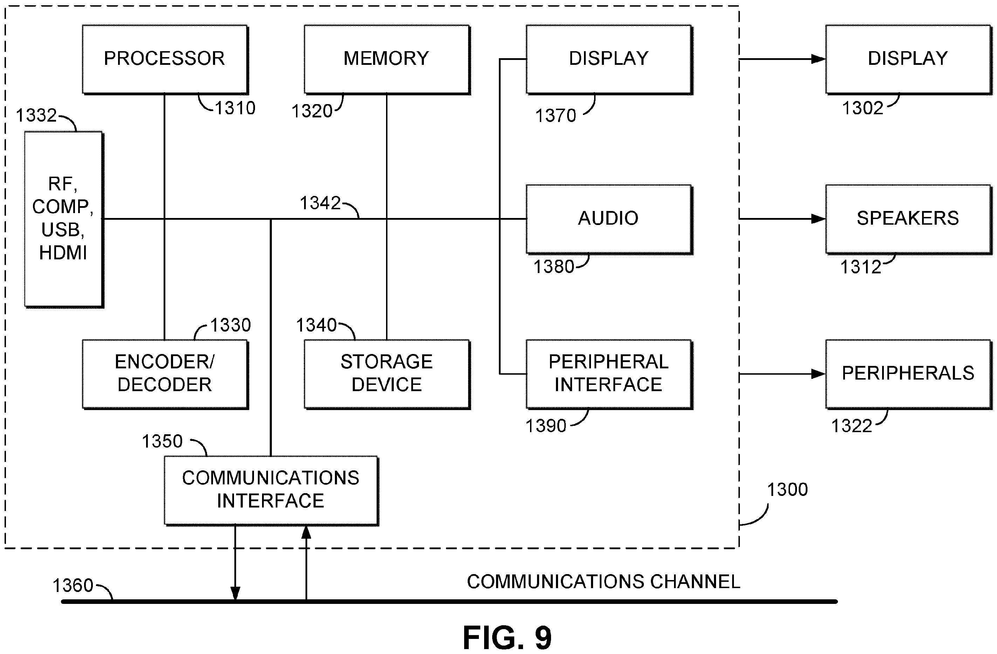

Some embodiments may be implemented on a system of one or more processors as illustrated in FIG. 9. FIG. 9 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

### Further Embodiments

Briefly stated, in one embodiment a method comprises: obtaining a scene description file representing an avatar, the scene description file including a texture sets component, the texture sets component including at least one texture set, each texture set identifying at least one texture, wherein at least a first one of the texture sets identifies a first texture and a second texture; obtaining a stream of texture weights including first weights associated with the first texture and second weights associated with the second texture; determining a parametric texture for the avatar using a combination of the textures in the first texture set, including the first texture weighted by the first weights and the second texture weighted by the second weights; and animating the avatar using the parametric texture.

An apparatus according to some embodiments comprises one or more processors configured to perform at least: obtaining a scene description file representing an avatar, the scene description file including a texture sets component, the texture sets component including at least one texture set, each texture set identifying at least one texture, wherein at least a first one of the texture sets identifies a first texture and a second texture; obtaining a stream of texture weights including first weights associated with the first texture and second weights associated with the second texture; determining a parametric texture for the avatar using a combination of the textures in the first texture set, including the first texture weighted by the first weights and the second texture weighted by the second weights; and animating the avatar using the parametric texture.

In some embodiments, the texture sets data structure includes a plurality of texture sets, including at least a second texture set different from the first texture set.

In some embodiments, the first texture set includes a material property, and wherein the avatar is animated using the material property associated with the first texture set.

In some embodiments, the first texture set includes an animation information property, the animation information property identifying at least one supported animation framework, and the avatar is animated using at least one of the identified supported animation frameworks.

In some embodiments, the scene description file includes a data object, and each of the textures identified in the texture sets identifies corresponding data included in the data object. In some such embodiments, for at least one of the first or the second textures, the corresponding data included in the data object includes a reference to texture data in an external file. In some such embodiments, the reference to texture data in the external file includes texture path information, the texture path information indicating which texture to consider in the external file

In some embodiments, the scene description file further includes a plurality of level-of-detail assets including at least a first level-of-detail asset identifying at least the first texture set, further comprising: making a determination to render the avatar using a level of detail associated with the first level-of-detail asset; wherein the use of the textures in the first texture set to determine the parametric texture is responsive to a determination that the first level-of-detail asset identifies the first texture set.

In some embodiments, the scene description file further includes a supported animation object identifying types of animation supported by the avatar, the supported animation object including a texture animations property identifying at least one type of supported texture animation.

An method according to some embodiments comprises: encoding a scene description file representing an avatar; wherein the scene description file includes a texture sets component; and wherein the texture sets component includes at least one texture set, each texture set identifying at least one texture.

An apparatus according to some embodiments comprises one or more processors configured to perform at least: encoding a scene description file representing an avatar; wherein the scene description file includes a texture sets component; and wherein the texture sets component includes at least one texture set, each texture set identifying at least one texture.

In some embodiments, the texture sets data structure includes a plurality of texture sets, including at least a second texture set different from the first texture set.

In some embodiments, the scene description file includes a data object, wherein each of the textures identified in the texture sets identifies corresponding data included in the data object, and wherein, for at least one of the first or the second textures, the corresponding data included in the data object includes a reference to texture data in an external file.

In some embodiments, the scene description file further includes a plurality of level-of-detail assets including at least a first level-of-detail asset identifying at least the first texture set.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining a scene description file representing an avatar, the scene description file including a texture sets component, the texture sets component including at least one texture set, each texture set identifying at least one texture, wherein at least a first one of the texture sets identifies a first texture and a second texture;
obtaining a stream of texture weights including first weights associated with the first texture and second weights associated with the second texture;
determining a parametric texture for the avatar using a combination of the textures in the first texture set, including the first texture weighted by the first weights and the second texture weighted by the second weights; and
animating the avatar using the parametric texture.

2. An apparatus comprising one or more processors configured to perform at least:
obtaining a scene description file representing an avatar, the scene description file including a texture sets component, the texture sets component including at least one texture set, each texture set identifying at least one texture, wherein at least a first one of the texture sets identifies a first texture and a second texture;
obtaining a stream of texture weights including first weights associated with the first texture and second weights associated with the second texture;
determining a parametric texture for the avatar using a combination of the textures in the first texture set, including the first texture weighted by the first weights and the second texture weighted by the second weights; and
animating the avatar using the parametric texture.

3. The method of claim 1, or the apparatus of claim 2, wherein the texture sets data structure includes a plurality of texture sets, including at least a second texture set different from the first texture set.

4. The method of claim 1, or claim 3 as it depends from claim 1, or the apparatus of claim 2, or claim 3 as it depends from claim 2, wherein the first texture set includes a material property, and wherein the avatar is animated using the material property associated with the first texture set.

5. The method of claim 1, or claims 3-4 as they depend from claim 1, or the apparatus of claim 2, or claims 3-4 as they depend from claim 2, wherein the first texture set includes an animation information property, the animation information property identifying at least one supported animation framework, and wherein the avatar is animated using at least one of the identified supported animation frameworks.

6. The method of claim 1, or claims 3-5 as they depend from claim 1, or the apparatus of claim 2, or claims 3-5 as they depend from claim 2, wherein the scene description file includes a data object, and wherein each of the textures identified in the texture sets identifies corresponding data included in the data object.

7. The method of claim 6 as it depends from claim 1, or the apparatus of claim 6 as it depends from claim 2, wherein, for at least one of the first or the second textures, the corresponding data included in the data object includes a reference to texture data in an external file.

8. The method of claim 7 as it depends from claim 1, or the apparatus of claim 7 as it depends from claim 2, wherein the reference to texture data in the external file includes texture path information, the texture path information indicating which texture to consider in the external file

9. The method of claim 1, or claims 3-8 as they depend from claim 1, or the apparatus of claim 2, or claims 3-8 as they depend from claim 2, wherein the scene description file further includes a plurality of level-of-detail assets including at least a first level-of-detail asset identifying at least the first texture set, further comprising:
making a determination to render the avatar using a level of detail associated with the first level-of-detail asset;
wherein the use of the textures in the first texture set to determine the parametric texture is responsive to a determination that the first level-of-detail asset identifies the first texture set.

10. The method of claim 1, or claims 3-9 as they depend from claim 1, or the apparatus of claim 2, or claims 3-9 as they depend from claim 2, wherein the scene description file further includes a supported animation object identifying types of animation supported by the avatar, the supported animation object including a texture animations property identifying at least one type of supported texture animation.

11. A method comprising:
encoding a scene description file representing an avatar;
wherein the scene description file includes a texture sets component; and
wherein the texture sets component includes at least one texture set, each texture set identifying at least one texture.

12. An apparatus comprising one or more processors configured to perform at least:
encoding a scene description file representing an avatar;
wherein the scene description file includes a texture sets component; and
wherein the texture sets component includes at least one texture set, each texture set identifying at least one texture.

13. The method of claim 11, or the apparatus of claim 12, wherein the texture sets data structure includes a plurality of texture sets, including at least a second texture set different from the first texture set.

14. The method of claim 11, or claim 13 as it depends from claim 11, or the apparatus of claim 12, or claim 13 as it depends from claim 12, wherein the scene description file includes a data object, wherein each of the textures identified in the texture sets identifies corresponding data included in the data object, and wherein, for at least one of the first or the second textures, the corresponding data included in the data object includes a reference to texture data in an external file.

15. The method of claim 11, or claims 13-14 as they depend from claim 11, or the apparatus of claim 12, or claims 13-14 as they depend from claim 12, wherein the scene description file further includes a plurality of level-of-detail assets including at least a first level-of-detail asset identifying at least the first texture set.
